# EUROPEAN PATENT SPECIFICATION

(11) **EP 3 418 592 B1**
(45) Date of publication and mention of the grant of the patent: **07.08.2019**
(21) Application number: 17177326.0
(22) Date of filing: 22.06.2017
(51) Int. Cl.: F16B 25/00

(54) **SCREW FOR ANCHORING A HOLLOW PROFILE TO A SUBSTRUCTURE**
SCHRAUBE ZUR VERANKERUNG EINES HOHLPROFILS AN EINER UNTERSTRUKTUR
VIS D'ANCRAGE D'UN PROFILÉ CREUX SUR UNE SOUS-STRUCTURE

(43) Date of publication of application: 26.12.2018
(73) Proprietor: SFS Intec Holding AG, 9435 Heerbrugg (CH)
(72) Inventor: COMOTH, Marc, 26290 Donzere (FR); WIRTH, Simon, 07 130 Saint Peray (FR)

(56) References cited:
- DE-U1- 20 018 425

## Description

The present invention relates to a screw construed for anchoring a hollow profile to a substructure.

### BACKGROUND OF THE INVENTION

Screws of the kind referred to are often utilized for fixing a window frame into an opening of a building. The substructure the frame has to be attached to can include wood, metal or masonry. Nowadays window frames are mostly being manufactured as hollow profiles from plastic, because of cost, insulating properties, weight and easy maintenance. For screws adapted for such purpose it is key to provide for reliable support in the hollow plastic profile as well as appropriate grip in the substructure. These profiles are known to exhibit reinforcing walls, which form elongated compartment-like cell-structures inside the hollow profile The present invention has a special focus on gripping or engaging with such structures in a hollow profile and suggests an superior profile of retainers or supports respectively.

### PRIOR ART

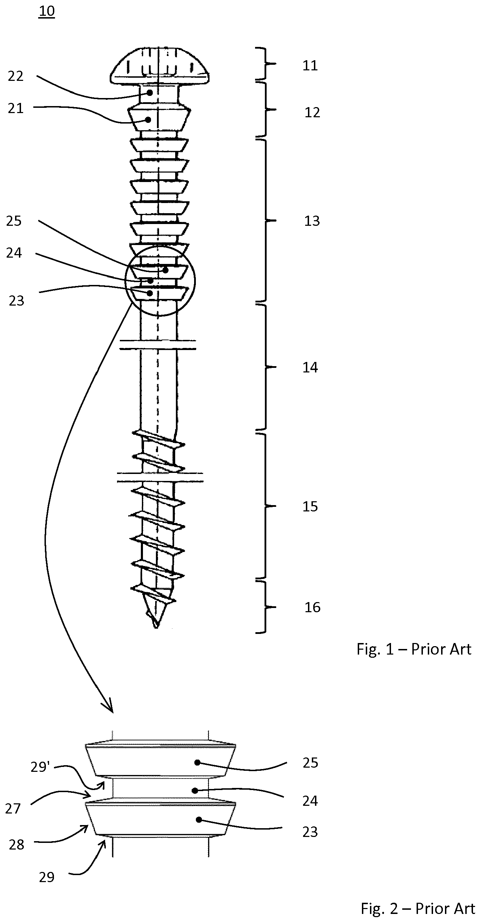

In Prior Art many concepts for the a.m. set of tasks have been proposed. Figure 1 shows a screw 10 with its basic components 11-16. It comprises a head 11 with a force application point, shaft sections 12-15 and a tip 16. The shaft section comprises a collar section 12 adjacent to the head with a stop collar 21 followed by a retainer section 13. Subsequently a smooth cylindrical shaft section 14 without ribs, retainer or threads is being arranged followed by a threaded section 15. The length of the screw is being chosen to allow for securing of the screw via threaded section 15 while retainer section 13 provides support for the hollow profile of a window frame. The length of the threaded shaft as well as the cylindrical smooth section 14 are advantageously chosen to match the need of the respective application.

As representative for many designs hereinafter shall be referred to DE 200 0018 425 U1. Its collar section 12 exhibits a collar 21 and a free shaft section 22 arranged between the head 11 and the stop collar 21. A portion of the subsequent retainer section 13 is displayed in more detail in Fig. 2. The retainer section exhibits a series of ribs or projections 23, 25 separated by smooth shaft portion 24. A rib 23 has the basic shape of two truncated cones arranged with their bases facing each other. The cones have different cone angles: The slope of the surface facing the head 27 is chosen to be steeper than the surface 28 facing the tip. This way the prior art design intended to simplify the mounting process, because the flatter angle surface 28 is easier to drive in than a steeper one. At the same time the surface 27, considerably steeper than surface 28, shaft section 24 together with (essentially) flat bottom 29, 29' provide a groove to safely hold said inner wall portions of the hollow profile. This way the plastic profile is not just secured at it its outer wall by the head 11 and stop collar 21, but also by the series of ribs 23, 25.

However, this design of the screw also bears some disadvantages. The manufacturing of the ribs 23, 25 is delicate and the tools necessary are costly. A rib 23 exhibits 3 surfaces with different angles and measures. To reliably manufacture the inner edges between surface 27 and smooth shaft 24 is demanding. Further on, the Prior-Art design is closely focused on window frames and profiles made from PVC and it's mechanical properties and thus lacks broad applicability.

It is therefore an objective of the invention to propose an alternative design for the retainer section of a screw of the kind discussed above allowing for a broader range of use in various materials.

This is accomplished by the features described in the independent claim 1. Dependent claims address further advantageous embodiments and variants.

### DETAILED DESCRIPTION OF THE INVENTION

The inventors have found that the design of the retainer section 34 of the shaft of a screw can be improved without compromising the good retaining qualities known from Prior Art while at the same time amending the ease of use. In a further improved embodiment it was even possible to provide for a symmetrical design of the retaining ribs 36, 36' which may help lowering the tooling cost for manufacturing such a type of screw.

A screw 30 according to the invention is intended, but not limited for anchoring a hollow profile to a substructure. A hollow profile generally means any body structure with an outer surface and a non-massive internal structure, i.e. exhibiting a kind of cellular structure with subdividing walls inside said body structure and caverns or hollows in between. The structure may be made of a single material or a mixture. The most common example of a hollow profile would be a framework for a window or a door, as it is commonly used in the building industry. Such profiles can be made of many different types of plastic such as PVC, PA66 with aggregates such as glass fibers. Especially for a larger framework enforcements of metal, such as tubes or elongated metal profiles are being integrated into one of the hollows of such profile.

However, a hollow profile may also include wood (cellular structure of wood fibre) or foamed structures exhibiting a solid and/or smooth surface with an irregular or regular cellular structure inside or honeycomb workpieces.

Unsurprisingly all these materials and material combinations exhibit different behavior in terms of elasticity, rigidity and breaking resistance and are further designed in numerous variations and variants (size, appearance, material thickness). In order to lower the complexity on a building site a highly versatile design of a fastener is required.

The basic design of a generic screw for the type of application mentioned has a thread on shaft section 32 which is responsible for the fixation in the substructure. The retainer section 34 with ribs (23, 25 cf. fig. 1 & 2) is intended to provide grip in said hollow structure by interlocking with the cellular structure of the hollow profile. Since, as mentioned above, a huge variety of cells or hollows (size, occurrence, rigidity) exist the ribs in the retainer section need to be as versatile as possible to warrant a broad usability of the screw. It has been found that the inventive design proposed herein shows a greater versatility for the range of materials and sizes nowadays used in the building industry for window / door -frames.

In order to achieve that, said screw comprises a tip 31, an essentially cylindrical shaft section 32 carrying a thread 33, a retainer section 34 and a head 35. The retainer section comprises on an essentially cylindrical shaft a plurality of equally spaced ribs (36, 36,', 36", 36"',...) with gaps (37, 37', 37",..) in between. Each rib exhibits a first flank (41, 41',...) oriented towards the head 35 with a slope angle α. Said angle is measured relative to a perpendicular on the central longitudinal axis of the screw. A second flank (42, 42',...) oriented towards the tip 31 has a slope angle β (measured again relative to a perpendicular on the central longitudinal axis of the screw). A crest (43, 43',...) is defined where the slopes (41/42, 41'/42',...) meet or intersect. The distance between two neighboring crests, measured in parallel and along the longitudinal axis of the fastener / screw is designated as Wt. The distance between the baselines of two subsequent slopes, measured parallel to the longitudinal axis and along the shaft of the screw, is described as Ws. In simplified terms Wt is the width of gap 37 measured between the crests, Ws the width of gap 37 at the bottom, at level of the shaft surface.

The inventive characteristics within said geometrical setup are characterized in that the distance Wt between two subsequent crests (43, 43',..) is between 2 and 2.5x the axial width Ws of the gap 37. The inventors have found that this proportion or range respectively clearly provides the best applicability of a screw of that kind.

In a further embodiment of the inventive screw 30 the ratio between the outer diameter Dt of the screw 30 measured via the crest 43 and the diameter Ds measured in the gap 37 is between 1.2 and 1.4. In absolute terms, the height of the crest measured radially in relation to the cylindrical base in gap 37 is between 0.5mm and 0.95mm.

In a preferred embodiment, the value for the angle α is chosen to be between 30°-50°. Further the angle β can be chosen to be between 30°-50°. Both angles may vary independently within the ranges given, however, in a further preferred embodiment angle β equals angle α. In technical terms the slopes (41, 41', 41",...) and (42, 42', 42",...) are symmetrical. For this symmetrical case with β = α, both β and α can be chosen to be between 36°-44° for a further embodiment of the invention.

In a further embodiment screw 30 exhibits an angle δ, measured between first flank 45 of collar section 38 and a perpendicular on the central longitudinal axis of the screw 30. Flank 45 is oriented towards the head 35 and will exhibit an angle δ shall between 15° to 25°, preferably essentially 20°.

Accordingly, screw 30 will exhibit a further angle γ defined as the angle of second flank 46 of collar section 38 measured relative to a perpendicular on the central longitudinal axis of screw 30. The slope is oriented towards the tip 31 and angle γ shall be chosen between 45°-55°, preferably 50°

### DETAILED DESCRIPTION OF THE FIGURES

Fig. 1 shows a Prior Art version of a generic screw
Fig. 2 focuses on the retainer section of said Prior Art screw.
Fig. 3 show the design of a screw according to the invention
Fig. 4 illustrates a detail of the retainer section of the screw of Fig. 3
Fig. 5 shows a head and a collar section of the screw according to Fig. 3
Fig. 6 shows an exemplary application case

Figure 1 exhibits a screw 19 with a head 11 with a force application point. The head can exhibit any technically suitable, known design (pan-head, countersunk head, ..) and the force application point will be chosen according to the preferences of the user or the usability required (hexagonal, T-star, Phillips). Adjacent to the head 11 a free, smooth shaft section 22 is arranged followed by a stop collar 21; both being designated as collar section 12. Subsequently a retainer section 13 exhibits ribs (projections from the shaft) 23, 25. Each of said ribs (detailed in Fig. 2) shows three surfaces: 27 facing the head 11 of screw 10; 29 (29') facing the tip 16 of the screw comparable to a flat bottom and surface 28 facing radially outward (with a certain angle relative to the central axis of screw 10). In between two of such ribs 23, 25 a free, smooth shaft section 24 establishes a gap. A thread-free section 14 is shown between retainer section 13 and a threaded shaft 15 which again is adjacent to tip 16.

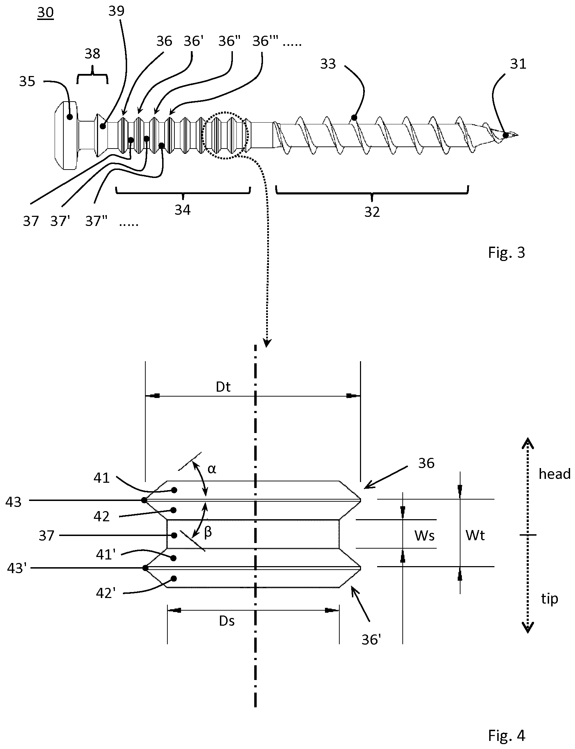

Figure 3 focuses on an embodiment according to the invention. A screw 30 comprises a tip 31 adjacent to a shaft section 32. Said section 32 includes threads 33. A retainer section 34 is arranged basically on the shaft between the tip 31 and screw head 35. It exhibits a plurality of ribs or projections 36, 36', 36",.... Those are interlocking elements intended to interact with the hollow structure to be fastened to a substructure. Gaps or interspaces 37, 37', 37", ... are arranged between those ribs. 41, 41',... describe the flanks or slopes of the ribs facing the head, whereas 42, 42',... designate (second) flank(s) or slope(s) facing the tip of screw 30. Where the two surfaces or flanks meet, the crest(s) 43, 43',... of the ribs 36, 36',...are located. Angles β and α define the angle of slope of flank 42 or 41 respectively. Wt is the width of gap 37 measured between the crests, Ws is the width of gap 37 at the bottom, at level of the shaft surface. Dt is the overall diameter of screw 30 measured at the retainer section 34, whereas Ds is the diameter of the shaft, between ribs 36, 36' measured in retainer section 34.

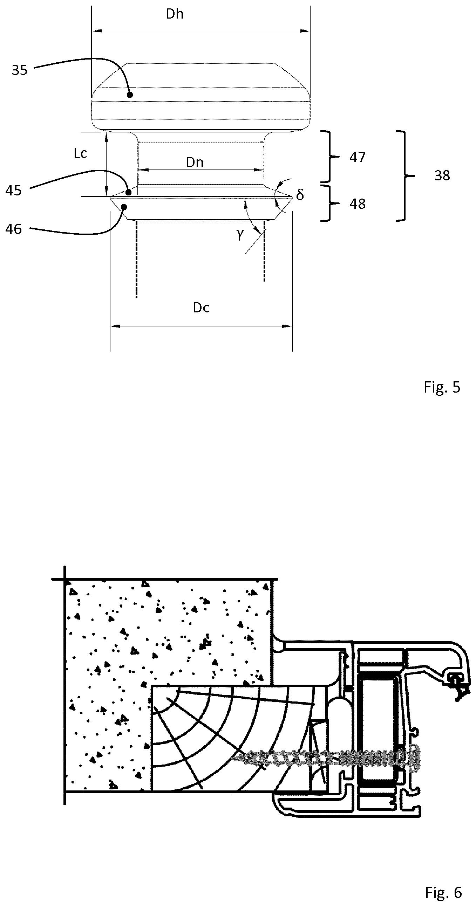

Between head 35 and retainer section 34 a collar section 38 is being arranged, which is shown in more detail in Figure 5. Collar section 38 essentially comprises a single rib 48 with a specific design plus a thread-free section 47. The single rib 48 essentially comprises a first flank or slope 45, whose surface is inclined by an angle δ, measured relative to a perpendicular on the central longitudinal axis of the screw 30. This surface is oriented towards the head 35. The second flank or slope 46, whose surface is inclined by an angle γ, measured relative to a perpendicular on the central longitudinal axis of the screw 30. This surface is oriented towards the tip 31 of the screw 30. In Figure 5 Dh means the diameter of the head, Lc the length of the interspace between the crest of single rib 48 and the bottom side of head 35. Dn is the diameter of free, smooth section 47. Dc is the diameter of rib 48 measured via the crest of rib 48.

Dimensions of Lc, Dc and Dn are chosen to allow for securing the top surface layer of a hollow profile in a vicinity of the head 11. Angle γ shall be chosen between 15° to 25°, preferably essentially 20°, whereas angle δ shall be 45°-55°, preferably 50°.

Figure 6 shows an application case, wherein a framework e.g. of plastic is mounted on a wooden substructure by means of a fastener screw according to the invention.

The inventive screw may exhibit various designs of threads 33 in shaft section 32. Depending on the application one will chose a thread-type appropriate for wood, concrete, bricks or alike. The tip 31 will be chosen accordingly, including sharp conical tips, drill bits, tips with threads reaching to the tip. The use of a dowel may be useful depending on the substructure.

The features of the invention described herein and/or disclosed in the claims or the figures may be combined in any technical reasonable way. The fact that not all possible combinations are listed does not imply they should be regarded as disclaimed or impossible.

### LIST OF RERENCE SIGNS

- 10: screw
- 11: head with force application point
- 12: collar section with stop collar (Anschlagbund)
- 13: retainer section
- 14: smooth cylindrical section
- 15: threaded shaft, threaded section
- 16: tip
- 21: (stop) collar
- 22, 24: free, smooth shaft section
- 23, 25: rib, projection
- 27: surface, slope facing the head of screw
- 28: surface, slope facing the tip of screw
- 29, 29': flat bottom
- 30: screw
- 31: tip
- 32: shaft section
- 33: thread
- 34: retainer section
- 35: head of screw
- 36, 36', 36",...: rib, projection
- 37, 37', 37", ...: gap, interspace
- 38: collar section
- 39: stop collar
- 41, 41',...: first flank
- 42, 42': second flank
- 43, 43',...: crest (Scheitel)
- 45: first flank or slope of collar section
- 46: second flank or slope of collar section
- 47: thread-free or smooth section
- 48: rib of collar section 38

## Claims

1. Screw (30) for anchoring a hollow profile to a substructure, said screw comprising a tip (31), an essentially cylindrical shaft section (32) carrying a thread (33), a retainer section (34), a collar section (38) and a head (35), said retainer section comprising, on an essentially cylindrical shaft, a plurality of equally spaced ribs (36, 36,', 36", 36''',...) with gaps (37, 37', 37",..) in between, each rib exhibiting a first flank (41, 41',...) oriented towards the head (35) with a slope angle α and a second flank (42, 42',...) oriented towards the tip (31) with a slope angle β and a crest (43, 43',...) where the slopes (41/42, 41'/42',...) meet, **characterized in that** the distance Wt between two subsequent crests (43, 43',..) is between 2 and 2.5x the axial width Ws of the gap (37).

2. Screw (30) according to claim 1, **characterized in that** the ratio between the outer diameter Dt of the screw (30) measured via the crest (43) and the diameter Ds measured in the gap (37) is between 1.2 and 1.4.

3. Screw (30) according to claim 1 and 2, **characterized in that** the height of the crest measured radially in relation to the cylindrical base in gap (37) is between 0.5mm and 0.95mm.

4. Screw (30) according to claim 1-3, **characterized in that** the angle α is chosen to be between 30°-50°.

5. Screw (30) according to claim 1-4, **characterized in that** the angle β is chosen to be between 30°-50°

6. Screw (30) according to claim 1-5, **characterized in that** angle β equals angle α.

7. Screw (30) according to claim 1-6, **characterized in that** β = α and both β and α are chosen to be between 36°-44°.

8. Screw (30) according to one of the preceding claims, with a slope angle δ, defined as the angle of first flank 45 of collar section 38 measured relative to a perpendicular on the central longitudinal axis of the screw 30 is oriented towards the head (35), **characterized in that** angle δ shall be chosen between 15° to 25°, preferably essentially 20°.

9. Screw (30) according to one of the preceding claims, with a slope angle γ, defined as the angle of second flank (46) of collar section (38) measured relative to a perpendicular on the central longitudinal axis of the screw (30) is oriented towards the tip (31), **characterized in that** angle γ shall be chosen between 45°-55°, preferably 50°

## Patentansprüche

1. Schraube (30) zum Verankern eines hohlen Profils an einer Unterstruktur, wobei die Schraube eine Spitze (31), einen im Wesentlichen zylindrischen Schaftabschnitt (32), der ein Gewinde (33) trägt, einen Halterabschnitt (34), einen Kragenabschnitt (38) und einen Kopf (35) umfasst, wobei der Halterabschnitt auf einem im Wesentlichen zylindrischen Schaft mehrere gleichmäßig beabstandete Rippen (36, 36', 36", 36"', ...) mit Spalten (37, 37', 37", ...) dazwischen umfasst, wobei jede Rippe eine erste Flanke (41, 41', ...), die hin zu dem Kopf (35) mit einem Neigungswinkel α ausgerichtet ist, und eine zweite Flanke (42, 42',... ), die hin zu der Spitze (31) mit einem Neigungswinkel β ausgerichtet ist, und einen Kamm (43, 43 ', ...) an der Stelle, an der sich die Neigungen (41/42, 41'/42', ...) treffen, aufweist, **dadurch gekennzeichnet, dass** der Abstand Wt zwischen zwei aufeinanderfolgenden Kämmen (43, 43, ...) zwischen 2 und 2,5x die axiale Breite Ws des Spalts (37) beträgt.

2. Schraube (30) nach Anspruch 1, **dadurch gekennzeichnet, dass** das Verhältnis zwischen dem äußeren Durchmesser Dt der Schraube (30), der über den Kamm (43) gemessen wird, und dem Durchmesser Ds, der in dem Spalt (37) gemessen wird, zwischen 1,2 und 1,4 beträgt.

3. Schraube (30) nach Anspruch 1 und 2, **dadurch gekennzeichnet, dass** die Höhe des Kamms, die radial in Beziehung zu der zylindrischen Basis in Spalt (37) gemessen wird, zwischen 0,5 mm und 0,95 mm beträgt.

4. Schraube (30) nach Anspruch 1-3, **dadurch gekennzeichnet, dass** der Winkel α zwischen 30°-50° gewählt ist.

5. Schraube (30) nach Anspruch 1-4, **dadurch gekennzeichnet, dass** der Winkel β zwischen 30°-50° gewählt ist.

6. Schraube (30) nach Anspruch 1-5, **dadurch gekennzeichnet, dass** Winkel β gleich Winkel α ist.

7. Schraube (30) nach Anspruch 1-6, **dadurch gekennzeichnet, dass** β = α und sowohl β als auch α zwischen 36°-44° gewählt sind.

8. Schraube (30) nach einem der vorhergehenden Ansprüche, wobei ein Neigungswinkel δ, der als der Winkel einer ersten Flanke (45) von Kragenabschnitt (38) definiert ist, der relativ zu einer Senkrechten auf der mittigen Längsachse der Schraube (30) gemessen wird, hin zu dem Kopf (35) ausgerichtet ist, **dadurch gekennzeichnet, dass** Winkel δ zwischen 15° bis 25°, vorzugsweise im Wesentlichen mit 20° gewählt ist.

9. Schraube (30) nach einem der vorhergehenden Ansprüche, wobei ein Neigungswinkel γ, der als der Winkel einer zweiten Flanke (46) von Kragenabschnitt (38) definiert ist, der relativ zu einer Senkrechten auf der mittigen Längsachse der Schraube (30) gemessen wird, hin zu der Spitze (31) ausgerichtet ist, **dadurch gekennzeichnet, dass** Winkel γ zwischen 45°-55°, vorzugsweise mit 50° gewählt ist.

## Revendications

1. Vis (30) d'ancrage d'un profilé creux à une sous-structure, ladite vis comprenant une pointe (31), une section d'arbre essentiellement cylindrique (32) portant un filetage (33), une section de retenue (34), une section de collier (38) et une tête (35), ladite section de retenue comprenant, sur un arbre essentiellement cylindrique, une pluralité de nervures (36, 36 `, 36", 36"', ...) espacées de manière égale avec des espaces (37, 37', 37", ...) entre, chaque nervure présentant un premier flanc (41, 41', ...) orienté en direction de la tête (35) avec un angle d'inclinaison α et un second flanc (42, 42', ...) orienté en direction de la pointe (31) avec un angle d'inclinaison β et une crête (43, 43', ...) où les inclinaisons (41/42, 41'/42') se rencontrent, **caractérisé en ce que** la distance Wt entre deux crêtes consécutives (43, 43') fait entre 2 et 2,5x fois la largeur axiale Ws de l'espace (37).

2. Vis (30) selon la revendication 1, **caractérisée en ce que** le rapport entre le diamètre extérieur Dt de la vis (30) mesuré par le biais de la crête (43) et le diamètre Ds mesuré dans l'espace (37) est situé entre 1,2 et 1,4.

3. Vis (30) selon la revendication 1 et 2, **caractérisée en ce que** la hauteur de la crête mesurée radialement par rapport à la base cylindrique dans l'espace (37) est située entre 0,5 mm et 0,95 mm.

4. Vis (30) selon la revendication 1-3, **caractérisée en ce que** l'angle α est choisi comme étant situé entre 30°-50°.

5. Vis (30) selon la revendication 1-4, **caractérisée en ce que** l'angle β est choisi comme étant situé entre 30°-50°.

6. Vis (30) selon la revendication 1-5, **caractérisée en ce que** l'angle β est égal à l'angle α.

7. Vis (30) selon la revendication 1-6, **caractérisée en ce que** β = α et β et α sont tous deux choisis comme étant situés entre 36°-44°.

8. Vis (30) selon l'une des revendications précédentes, avec un angle d'inclinaison δ, défini en tant que l'angle du premier flanc (45) de la section de collier (38) mesuré par rapport à une perpendiculaire sur l'axe longitudinal central de la vis (30) est orienté en direction de la tête (35), **caractérisé en ce que** l'angle δ doit être choisi entre 15° et 25°, de préférence essentiellement 20°.

9. Vis (30) selon l'une des revendications précédentes, avec un angle d'inclinaison γ défini en tant que l'angle du second flanc (46) de la section de collier (38) mesuré par rapport à une perpendiculaire sur l'axe longitudinal central de la vis (30) est orienté en direction de la pointe (31), **caractérisé en ce que** l'angle γ doit être choisi entre 45° et 55°, de préférence 50°.
